# EUROPEAN PATENT APPLICATION

(11) **EP 4 046 842 A1**
(43) Date of publication of application: **24.08.2022**
(21) Application number: 20886476.9
(22) Date of filing: 26.05.2020
(51) Int. Cl.: B60K 6/442, B60K 6/36, B60K 6/50, B60K 6/52, B60K 17/06

(54) **SPEED REDUCER, DRIVING SYSTEM OF ELECTRIC VEHICLE, AND ELECTRIC VEHICLE**

(30) Priority: 15.11.2019 CN 201911116557
(71) Applicant: Huawei Technologies Co., Ltd., Longgang Shenzhen, Guangdong 518129 (CN)
(72) Inventor: ZHENG, Yihong, Shenzhen, Guangdong 518129 (CN); LIU, Fengyu, Shenzhen, Guangdong 518129 (CN)
(74) Representative: Epping - Hermann - Fischer
(86) International application number: PCT/CN2020/092242
(87) International publication number: WO 2021/093305

(57) **Abstract**

This application provides a reduction gearbox (100), an electric vehicle drive system, and an electric vehicle. The reduction gearbox (100) includes a motor input shaft (1a), an engine input shaft (1b), an intermediate shaft (2), a first output shaft (3a), a second output shaft (3b), and a differential gear (4), where the first output shaft (3a) and the second output shaft (3b) are in transmission connection with the differential gear (4); and further includes: a first transmission assembly (XI), configured to connect power transmission between the motor input shaft (1a) and the intermediate shaft (2); a second transmission assembly (X2), configured to connect or disconnect power transmission between the engine input shaft (1a) and the intermediate shaft (2); and a third transmission assembly (X3), configured to connect or disconnect power transmission between the intermediate shaft (2) and the differential gear (4). The reduction gearbox provided in this application can resolve a problem that an engine and a generator in an existing series extended range electric vehicle cannot directly drive a vehicle, thereby improving acceleration performance, economy, and maneuverability of the vehicle.

## Description

This application claims priority to Chinese Patent Application No. 201911116557.0, filed with the Chinese Patent Office on November 15, 2019 and entitled "REDUCTION GEARBOX, ELECTRIC VEHICLE DRIVE SYSTEM, AND ELECTRIC VEHICLE", which is incorporated herein by reference in its entirety.

### TECHNICAL FIELD

This application relates to the field of electric vehicle technologies, and in particular, to a reduction gearbox, an electric vehicle drive system, and an electric vehicle.

### BACKGROUND

A battery electric vehicle (battery electric vehicle) is a vehicle that is completely powered by a rechargeable battery. At present, battery electric vehicles still have common problems such as a short driving range, a long charging time, a large battery weight, and high costs, while extended range electric vehicles can resolve these problems of the battery electric vehicles in a desirable manner. A pure electric drive mode is used when power of a power battery of a vehicle is sufficient, and an extended range drive mode is used instead when power of the power battery of the vehicle is relatively low. Therefore, an extended range electric vehicle is one of mainstream new-energy vehicle solutions in the market currently.

Generally, an extended range electric vehicle uses a serial drive solution. To be specific, an engine and a generator cannot directly drive the vehicle, but the engine drives the generator to generate electricity and supply power to a power battery and a driving motor to extend a driving range of the vehicle. A disadvantage of this solution is that the engine and the generator cannot directly drive the vehicle, and a transfer path of an energy flow is long, leading to poor economy of the vehicle.

### SUMMARY

This application provides a reduction gearbox, an electric vehicle drive system, and an electric vehicle, to resolve a problem that an engine and a generator in an existing series extended range electric vehicle cannot directly drive a vehicle, thereby improving acceleration performance, economy, and maneuverability of the vehicle.

According to a first aspect, a reduction gearbox is provided, including a motor input shaft, an engine input shaft, an intermediate shaft, a first output shaft, a second output shaft, and a differential gear. Both the first output shaft and the second output shaft are in transmission connection with the differential gear. The reduction gearbox further includes: a first transmission assembly, configured to connect power transmission between the motor input shaft and the intermediate shaft; a second transmission assembly, configured to connect or disconnect power transmission between the engine input shaft and the intermediate shaft; and a third transmission assembly, configured to connect or disconnect power transmission between the intermediate shaft and the differential gear.

In this application, the first transmission assembly, the second transmission assembly, and the third transmission assembly can control a power transmission path inside the reduction gearbox. Specifically, there may be several cases as follows.

Case (1): When the power transmission between the engine input shaft and the intermediate shaft is disconnected and the power transmission between the intermediate shaft and the differential gear is connected, a motor serves as a power output apparatus. Output power is transmitted to the first output shaft and the second output shaft after successively passing through the motor input shaft, the intermediate shaft, and the differential gear, and is finally transmitted to wheels.

Case (2): When the power transmission between the engine input shaft and the intermediate shaft is connected and the power transmission between the intermediate shaft and the differential gear is disconnected, a motor serves as a power generation apparatus. Power output by an engine is transmitted to the motor after successively passing through the engine input shaft, the intermediate shaft, and the motor input shaft, and the motor generates electricity.

Case (3): When the power transmission between the engine input shaft and the intermediate shaft is connected and the power transmission between the intermediate shaft and the differential gear is also connected, there may be two cases based on whether a motor serves as a power output apparatus or a power generation apparatus.

Case (3a): When the motor serves as a power output apparatus, power output by the motor is transmitted to the intermediate shaft after passing through the motor input shaft, and power output by an engine is also transmitted to the intermediate shaft after passing through the engine input shaft. The power of the motor and the engine converges, is then transmitted to the first output shaft and the second output shaft through the differential gear, and is finally transmitted to wheels.

Case (3b): When the motor serves as a power generation apparatus, power output by an engine is transmitted to the intermediate shaft after passing through the engine input shaft. In this case, the power is divided into two parts. One part of the power is transmitted to the motor after passing through the motor input shaft, and the motor generates electricity. The other part of the power is transmitted to the first output shaft and the second output shaft through the differential gear and is finally transmitted to wheels.

Case (4): When the power transmission between the engine input shaft and the intermediate shaft is connected or disconnected and the power transmission between the intermediate shaft and the differential gear is disconnected, both a motor and an engine may not work, but serve as standby auxiliary apparatuses for drive of a vehicle. In this case, a torque of the differential gear is not transmitted to the intermediate shaft, the motor input shaft, and the engine input shaft in a traveling process of the vehicle. Therefore, no additional mechanical rotation friction loss is caused. This improves economy of the vehicle.

In summary, the reduction gearbox provided in this application can enrich use functions of the motor and the engine, and enables the motor and the engine to directly drive the vehicle to travel. In this way, an energy transfer path is shortened and a quantity of times of energy conversion is reduced, thereby improving acceleration performance, economy, and maneuverability of the vehicle.

In a possible design, the first transmission assembly includes: a motor input shaft gear, which is sleeved on the motor input shaft and is in transmission connection with the motor input shaft; and an intermediate shaft gearwheel, which is sleeved on the intermediate shaft, is in transmission connection with the intermediate shaft, and meshes with the motor input shaft gear.

The power transmission between the motor input shaft and the intermediate shaft can be connected by using the motor input shaft gear and the intermediate shaft gearwheel. For example, the power that is output by the motor and that is on the motor input shaft may be transmitted to the intermediate shaft by using the motor input shaft gear and the intermediate shaft gearwheel.

For another example, the power that is output by the engine and that is on the intermediate shaft may be transmitted to the motor input shaft by using the motor input shaft gear and the intermediate shaft gearwheel, so that the motor can generate electricity.

It should be understood that the foregoing uses two gears as an example to describe composition of the first transmission assembly, but cannot be construed as any limitation on the composition of the first transmission assembly. A quantity of components, and a form and the like of the component included in the first transmission assembly are not limited in this application, and any transmission assembly (or a single component) that can implement the foregoing power transmission functions shall fall within the protection scope of this application.

For example, in another embodiment, the first transmission assembly may include more gears.

For another example, in another embodiment, some or all of the current gears of the first transmission assembly may be replaced with another transmission component such as a chain.

For still another example, the first transmission assembly may further include at least one clutch for better transmission control.

It should be understood that in the reduction gearbox provided in this embodiment of this application, for a component that is sleeved on a shaft and that is in transmission connection with the shaft, power transmission between the component and the shaft may be implemented in a key (for example, a spline) joint manner.

In a possible design, the second transmission assembly includes: a first clutch, including a first active part and a first passive part that fit in with each other, where the first active part is in transmission connection with the engine input shaft; an engine input shaft gear, which is in transmission connection with the first passive part; and an intermediate shaft pinion, which is sleeved on the intermediate shaft, is in transmission connection with the intermediate shaft, and meshes with the engine input shaft gear.

It should be understood that the foregoing uses two gears and one clutch as an example to describe composition of the second transmission assembly, but cannot be construed as any limitation on the composition of the second transmission assembly. A quantity of components, and a form and the like of the component included in the second transmission assembly are not limited in this application, and any transmission assembly (or a single component) that can implement the foregoing power transmission functions shall fall within the protection scope of this application.

For example, in another embodiment, the second transmission assembly may include more gears.

For another example, in another embodiment, some or all of the current gears of the second transmission assembly may be replaced with another transmission component such as a chain.

For still another example, in another embodiment, the clutch of the second transmission assembly in this embodiment may alternatively be replaced with a component such as a synchronizer, to connect and disconnect power transmission.

With reference to the foregoing related description of the case (2) regarding the power transmission path, in this embodiment of this application, the power output by the engine can be transmitted to the motor only after passing through a plurality of gears such as the engine input shaft gear, the intermediate shaft pinion, the intermediate shaft gearwheel, and the motor input shaft gear, so that the motor generates electricity, instead of directly connecting the motor input shaft to the engine input shaft gear in a transmission manner. A maximum rotational speed of the motor is usually greater than a maximum rotational speed of the engine. Therefore, a rotational speed ratio can be properly adjusted based on a requirement by using the foregoing setting in this application. In this way, the engine and the motor can work at different rotational speeds, to give full play to their respective rotational speed and torque characteristics.

In a possible design, the third transmission assembly includes: the intermediate shaft pinion; an output shaft gear, which is merely sleeved on the differential gear and meshes with the intermediate shaft pinion; and a second clutch, including a second active part and a second passive part that fit in with each other, where the second active part is in transmission connection with the output shaft gear, and the second passive part is in transmission connection with the differential gear.

Specifically, in this embodiment, the third transmission assembly includes the intermediate shaft pinion. It can be learned from the foregoing analysis that the intermediate shaft pinion is also a part of the second transmission assembly. In other words, the intermediate shaft pinion is shared by the third transmission assembly and the second transmission assembly. By using the foregoing setting, a structure of the reduction gearbox can be simplified, control complexity can be reduced, and production costs can be reduced.

The output shaft gear is merely sleeved on the differential gear and meshes with the intermediate shaft pinion. It can be understood that, that the output shaft gear is merely sleeved on the differential gear means that the output shaft gear is sleeved on the differential gear but power transmission cannot be performed directly between the output shaft gear and the differential gear. For example, the output shaft gear may be sleeved on the differential gear by using a bearing.

The second clutch includes the second active part and the second passive part that fit in with each other. The second active part is in transmission connection with the output shaft gear, and the second passive part is in transmission connection with the differential gear. The second passive part may be considered as a power input end of the differential gear.

It should be understood that the foregoing uses two gears and one clutch as an example to describe composition of the third transmission assembly, but cannot be construed as any limitation on the composition of the third transmission assembly. A quantity of components, and a form and the like of the component included in the third transmission assembly are not limited in this application, and any transmission assembly (or a single component) that can implement the foregoing power transmission functions shall fall within the protection scope of this application.

For example, in another embodiment, the third transmission assembly may include more gears.

For another example, in another embodiment, the third transmission assembly and the second transmission assembly do not share the intermediate shaft pinion. A separate gear may be disposed on the intermediate shaft to mesh with the output shaft gear, to replace the intermediate shaft pinion in the third transmission assembly. Alternatively, the third transmission assembly and the first transmission assembly may share the intermediate shaft gearwheel, and the output shaft gear meshes with the intermediate shaft gearwheel.

For still another example, in another embodiment, some or all of the current gears of the third transmission assembly may be replaced with another transmission component such as a chain.

For yet another example, in another embodiment, the clutch of the third transmission assembly in this embodiment may alternatively be replaced with a component such as a synchronizer, to connect and disconnect power transmission.

According to a second aspect, an electric vehicle drive system is provided, including a first drive system. The first drive system includes a first motor, an engine, and the reduction gearbox provided in any design of the first aspect. The motor input shaft is in transmission connection with the first motor, and the engine input shaft is in transmission connection with the engine. The first motor is a dual-purpose motor that is capable of converting mechanical energy into electrical energy and converting electrical energy into mechanical energy.

Optionally, the first drive system may be a front-wheel drive system of a vehicle, or may be a rear-wheel drive system of the vehicle. This is not limited in this application.

Optionally, the first drive system may be a unique drive system of the vehicle, or may be one of a plurality of (for example, two) drive systems of the vehicle. This is not limited in this application.

In a possible design, the drive system further includes a second drive system. The second drive system includes a second motor and a variable speed transmission apparatus, and the second motor is in transmission connection with the variable speed transmission apparatus.

In a possible design, a drive mode of the drive system includes a pure electric two-wheel drive mode. In the pure electric two-wheel drive mode, the first motor and the engine are in a stopped state, the power transmission between the intermediate shaft and the differential gear is in a disconnected state, and the power transmission between the engine input shaft and the intermediate shaft is in a connected or disconnected state; and the second motor is in a driving state.

In a possible design, a drive mode of the drive system includes a pure electric four-wheel drive mode. In the pure electric four-wheel drive mode, the first motor is in a driving state, the engine is in a stopped state, the power transmission between the intermediate shaft and the differential gear is in a connected state, and the power transmission between the engine input shaft and the intermediate shaft is in a disconnected state; and the second motor is in a driving state.

In a possible design, a drive mode of the drive system includes an extended range serial drive mode. In the extended range serial drive mode, the first motor is in a power generation state, the engine is in a driving state, the power transmission between the intermediate shaft and the differential gear is in a disconnected state, and the power transmission between the engine input shaft and the intermediate shaft is in a connected state; and the second motor is in a driving state.

In a possible design, a drive mode of the drive system includes an extended range parallel drive mode. In the extended range parallel drive mode, the first motor is in a driving or power generation state, the engine is in a driving state, the power transmission between the intermediate shaft and the differential gear is in a connected state, and the power transmission between the engine input shaft and the intermediate shaft is in a connected state; and the second motor is in a driving state.

In a possible design, the first drive system is a front-wheel drive system, and the second drive system is a rear-wheel drive system; or the first drive system is a rear-wheel drive system, and the second drive system is a front-wheel drive system.

In a possible design, the drive system further includes a vehicle controller (which may be, for example, an electronic control unit (electronic control unit, ECU)), a first motor controller, a second motor controller, an engine controller, a power battery, a reduction gearbox controller, and a variable speed transmission apparatus controller.

The first motor controller is electrically connected to both the first motor and the vehicle controller, the second motor controller is electrically connected to both the second motor and the vehicle controller, the engine controller is electrically connected to both the engine and the vehicle controller, and the reduction gearbox controller and the variable speed transmission apparatus controller are electrically connected to the vehicle controller. The power battery is electrically connected to all of the first motor, the second motor, and the vehicle controller.

According to a third aspect, an electric vehicle is provided, including wheels, halfshafts, and the drive system provided in any design of the second aspect. The drive system is in transmission connection with the wheels through the halfshafts, to drive the electric vehicle to travel.

### BRIEF DESCRIPTION OF DRAWINGS

FIG. 1 is a driving principle diagram of an existing series extended range electric vehicle;
FIG. 2 is a schematic diagram of a structure of a reduction gearbox according to an embodiment of this application;
FIG. 3 is an example schematic diagram of a structure of an electric vehicle drive system according to an embodiment of this application;
FIG. 4 is another example schematic diagram of a structure of an electric vehicle drive system according to an embodiment of this application;
FIG. 5 is still another example schematic diagram of a structure of an electric vehicle drive system according to an embodiment of this application;
FIG. 6 is a schematic diagram of a power transmission path for a drive system in a pure electric two-wheel drive mode;
FIG. 7 is a schematic diagram of a power transmission path for a drive system in a pure electric four-wheel drive mode;
FIG. 8 is a schematic diagram of a power transmission path for a drive system in an extended range serial drive mode;
FIG. 9 is a schematic diagram of a power transmission path for a drive system in an extended range parallel drive mode; and
FIG. 10 is a control principle diagram of an electric vehicle drive system according to an embodiment of this application.

### DESCRIPTION OF EMBODIMENTS

To make technical solutions and advantages of this application clearer, the following further describes the implementations of this application in detail with reference to the accompanying drawings. Unless otherwise defined, all technical terms used in the embodiments of this disclosure have a same meaning as that generally understood by a person skilled in the art.

With continuous harshness of the earth's environment, people's desire for electric vehicles has become stronger. Battery electric vehicles have features such as zero emission, zero pollution, high efficiency, and no dependence on oil. However, because energy density of a storage battery and a driving range that are needed by electric vehicles cannot satisfy people's requirements at present, the electric vehicles are not competitive with conventional internal combustion engines. As an electric vehicle for which a driving range can be increased and that integrates advantages of a hybrid electric vehicle and a battery electric vehicle, an extended range electric vehicle can be a good transition from an internal combustion engine vehicle to a battery electric vehicle.

On the basis of an original battery electric vehicle, an extended range electric vehicle is additionally provided with an in-vehicle power supply system. In this way, when power of a battery is insufficient, the in-vehicle power supply system can supply power to the battery and then the battery can supply power to a drive system of the extended range electric vehicle, or the in-vehicle power supply system can directly supply power to the drive system, so that a driving range of the extended range electric vehicle can be increased.

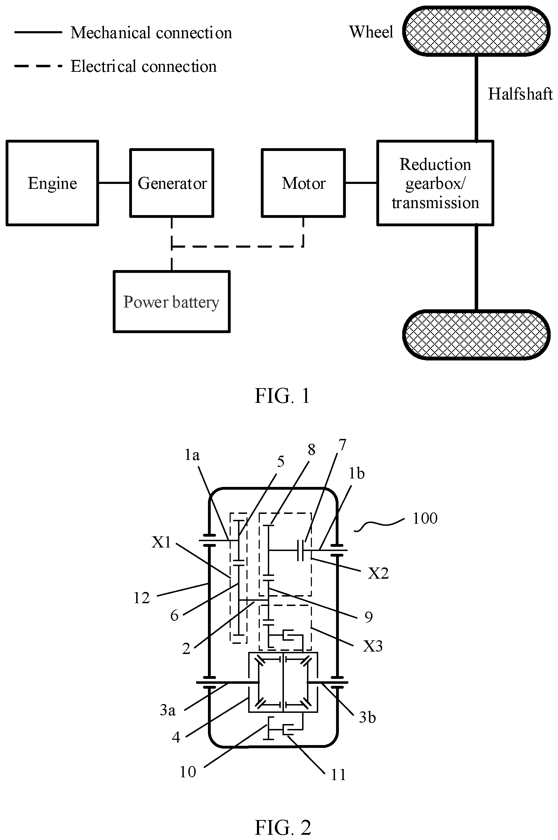

An existing extended range electric vehicle usually uses a serial drive mode. FIG. 1 is a driving principle diagram of an existing series extended range electric vehicle. When an in-vehicle rechargeable power battery system cannot satisfy a driving range requirement of the vehicle, a vehicle-mounted auxiliary power supply apparatus can be turned on to provide energy for a power system, to extend a driving range of the electric vehicle. Specifically, as shown in FIG. 1, in this case, an engine may be controlled to drive a generator to generate electricity and supply power to a power battery, the power battery supplies power to a motor, and the motor drives wheels to travel by using a reduction gearbox or a transmission. Alternatively, after an engine drives a generator to generate electricity, the generator may directly supply power to a motor, and the motor drives wheels to travel by using a reduction gearbox or a transmission.

However, in the foregoing drive solution, both the engine and the generator have a single function and cannot directly drive the vehicle, and economy of the vehicle is poor when an extended range serial drive mode is used, because a transfer path of an energy flow is long (to be specific, the engine drives the generator to generate electricity → the generator charges the power battery after generating electricity → the power battery supplies power to the motor after the power battery discharges → the motor drives the vehicle to travel), and much energy is lost after many times of conversion are performed.

Based on the foregoing analysis, in embodiments of this application, a reduction gearbox of a drive system is optimized and improved, to resolve a problem that an engine and a generator in an existing series extended range electric vehicle cannot directly drive a vehicle, thereby improving acceleration performance, economy, and maneuverability of the vehicle.

According to a first aspect, this application first provides a reduction gearbox, which can be applied to an electric vehicle drive system. FIG. 2 is a schematic diagram of a structure of a reduction gearbox 100 according to an embodiment of this application.

As shown in FIG. 2, the reduction gearbox 100 provided in this embodiment of this application includes a motor input shaft 1a, an engine input shaft 1b, an intermediate shaft 2, a first output shaft 3a, a second output shaft 3b, a differential gear 4, a first transmission assembly X1, a second transmission assembly X2, and a third transmission assembly X3.

Both the first output shaft 3a and the second output shaft 3b are in transmission connection with the differential gear 4.

The first transmission assembly X1 is configured to connect power transmission between the motor input shaft 1a and the intermediate shaft 2.

The second transmission assembly X2 is configured to connect or disconnect power transmission between the engine input shaft 1b and the intermediate shaft 2.

The third transmission assembly X3 is configured to connect or disconnect power transmission between the intermediate shaft 2 and the differential gear 4.

Specifically, in this embodiment of this application, the motor input shaft 1a of the reduction gearbox 100 is configured to be in transmission connection with an output shaft of a motor, for example, may be connected to the output shaft of the motor through a spline.

The motor may be a dual-purpose motor that is capable of converting mechanical energy into electrical energy and converting electrical energy into mechanical energy. In other words, the motor may serve as a driving motor and can output power under the action of electric power, and may also serve as a generator (in this case, the output shaft of the motor is an input shaft) and generates electricity under the action of external driving force.

The motor is in transmission connection with the motor input shaft 1a. When the motor works in a driving mode, the motor may transmit power to the reduction gearbox 100 through the motor input shaft 1a. When the motor works in a power generation mode, power of the reduction gearbox 100 may be transmitted to the motor through the motor input shaft 1a, so that the motor generates electricity.

The engine input shaft 1b of the reduction gearbox 100 is configured to be in transmission connection with an output shaft of an engine, for example, may be connected to the output shaft of the engine through a spline. Power output by the engine is transmitted to the reduction gearbox 100 through the engine input shaft 1b.

The first output shaft 3a and the second output shaft 3b are respectively configured to transmittingly connect to a wheel C on a left side and a wheel C on a right side of a vehicle, to transmit power to the wheels C, so as to drive the vehicle to drive. For example, the first output shaft 3a and the second output shaft 3b may respectively be in transmission connection with the wheels on the two sides through halfshafts.

The differential gear 4 enables left and right (or front and rear) driving wheels to rotate at different rotational speeds, and can ensure pure rolling motion of the driving wheels on the two sides when the vehicle is turning or is traveling on an uneven road.

The differential gear 4 includes one power input end and two power output ends. The first output shaft 3a and the second output shaft 3b are respectively in transmission connection with the two power output ends of the differential gear 4.

The first transmission assembly X1, the second transmission assembly X2, and the third transmission assembly X3 can control a power transmission path inside the reduction gearbox 100. Specifically, there may be several cases as follows.

Case (1): When the power transmission between the engine input shaft 1b and the intermediate shaft 2 is disconnected and the power transmission between the intermediate shaft 2 and the differential gear 4 is connected, the motor serves as a power output apparatus. The output power is transmitted to the first output shaft 3a and the second output shaft 3b after successively passing through the motor input shaft 1a, the intermediate shaft 2, and the differential gear 4, and is finally transmitted to wheels.

Case (2): When the power transmission between the engine input shaft 1b and the intermediate shaft 2 is connected and the power transmission between the intermediate shaft 2 and the differential gear 4 is disconnected, the motor serves as a power generation apparatus. The power output by the engine is transmitted to the motor after successively passing through the engine input shaft 1b, the intermediate shaft 2, and the motor input shaft 1a, and the motor generates electricity.

Case (3): When the power transmission between the engine input shaft 1b and the intermediate shaft 2 is connected and the power transmission between the intermediate shaft 2 and the differential gear 4 is also connected, there may be two cases based on whether the motor serves as a power output apparatus or a power generation apparatus.

Case (3a): When the motor serves as a power output apparatus, the power output by the motor is transmitted to the intermediate shaft 2 after passing through the motor input shaft 1a, and the power output by the engine is also transmitted to the intermediate shaft 2 after passing through the engine input shaft 1b. The power of the motor and the engine converges, is then transmitted to the first output shaft 3a and the second output shaft 3b through the differential gear 4, and is finally transmitted to wheels.

Case (3b): When the motor serves as a power generation apparatus, the power output by the engine is transmitted to the intermediate shaft 2 after passing through the engine input shaft 1b. In this case, the power is divided into two parts. One part of the power is transmitted to the motor after passing through the motor input shaft 1a, and the motor generates electricity. The other part of the power is transmitted to the first output shaft 3a and the second output shaft 3b through the differential gear 4 and is finally transmitted to wheels.

Case (4): When the power transmission between the engine input shaft 1b and the intermediate shaft 2 is connected or disconnected and the power transmission between the intermediate shaft 2 and the differential gear 4 is disconnected, both the motor and the engine may not work, but serve as standby auxiliary apparatuses for drive of the vehicle. In this case, a torque of the differential gear 4 is not transmitted to the intermediate shaft 2, the motor input shaft 1a, and the engine input shaft 1b in a traveling process of the vehicle. Therefore, no additional mechanical rotation friction loss is caused. This improves economy of the vehicle.

In summary, the reduction gearbox 100 provided in this embodiment of this application can enrich use functions of the motor and the engine, and enables the motor and the engine to directly drive the vehicle to travel. In this way, an energy transfer path is shortened and a quantity of times of energy conversion is reduced, thereby improving acceleration performance, economy, and maneuverability of the vehicle.

The first transmission assembly X1 is configured to connect the power transmission between the motor input shaft 1a and the intermediate shaft 2. As shown in FIG. 2, in the embodiment of this application, the first transmission assembly X1 includes a motor input shaft gear 5 and an intermediate shaft gearwheel 6.

Specifically, the motor input shaft gear 5 is sleeved on the motor input shaft 1a and is in transmission connection with the motor input shaft 1a. The intermediate shaft gearwheel 6 is sleeved on the intermediate shaft 2, is in transmission connection with the intermediate shaft 2, and meshes with the motor input shaft gear 5. The power transmission between the motor input shaft 1a and the intermediate shaft 2 can be connected by using the motor input shaft gear 5 and the intermediate shaft gearwheel 6.

For example, the power that is output by the motor and that is on the motor input shaft 1a may be transmitted to the intermediate shaft 2 by using the motor input shaft gear 5 and the intermediate shaft gearwheel 6.

For another example, the power that is output by the engine and that is on the intermediate shaft 2 may be transmitted to the motor input shaft 1a by using the motor input shaft gear 5 and the intermediate shaft gearwheel 6, so that the motor can generate electricity.

It should be understood that the foregoing uses two gears as an example to describe composition of the first transmission assembly X1, but cannot be construed as any limitation on the composition of the first transmission assembly X1. A quantity of components, and a form and the like of the component included in the first transmission assembly X1 are not limited in this application, and any transmission assembly (or a single component) that can implement the foregoing power transmission functions shall fall within the protection scope of this application.

For example, in another embodiment, the first transmission assembly X1 may include more gears.

For another example, in another embodiment, some or all of the current gears of the first transmission assembly X1 may be replaced with another transmission component such as a chain.

For still another example, the first transmission assembly X1 may further include at least one clutch for better transmission control.

It should be understood that in the reduction gearbox 100 provided in this embodiment of this application, for a component that is sleeved on a shaft and that is in transmission connection with the shaft, power transmission between the component and the shaft may be implemented in a key (for example, a spline) joint manner.

The second transmission assembly X2 is configured to connect or disconnect the power transmission between the engine input shaft 1b and the intermediate shaft 2. As shown in FIG. 2, in this embodiment of this application, the second transmission assembly X2 includes a first clutch 7, an engine input shaft gear 8, and an intermediate shaft pinion 9.

Specifically, the first clutch 7 includes a first active part and a first passive part that fit in with each other, where the first active part is in transmission connection with the engine input shaft 1b;
the engine input shaft gear 8 is in transmission connection with the first passive part; and
the intermediate shaft pinion 9 is sleeved on the intermediate shaft 2, is in transmission connection with the intermediate shaft 2, and meshes with the engine input shaft gear 8.

The power transmission between the engine input shaft 1b and the intermediate shaft 2 can be connected by joining the first active part and the first passive part of the first clutch 7 together, and the power transmission between the engine input shaft 1b and the intermediate shaft 2 can be disconnected by separating the first active part from the first passive part.

When the first active part and the first passive part are joined together, the power output by the engine may be transmitted to the intermediate shaft 2 after successively passing through the engine input shaft 1b, the first clutch 7, the engine input shaft gear 8, and the intermediate shaft pinion 9.

It should be understood that the foregoing uses two gears and one clutch as an example to describe composition of the second transmission assembly X2, but cannot be construed as any limitation on the composition of the second transmission assembly X2. A quantity of components, and a form and the like of the component included in the second transmission assembly X2 are not limited in this application, and any transmission assembly (or a single component) that can implement the foregoing power transmission functions shall fall within the protection scope of this application.

For example, in another embodiment, the second transmission assembly X2 may include more gears.

For another example, in another embodiment, some or all of the current gears of the second transmission assembly X2 may be replaced with another transmission component such as a chain.

For still another example, in another embodiment, the clutch of the second transmission assembly X2 in this embodiment may alternatively be replaced with a component such as a synchronizer, to connect and disconnect power transmission.

With reference to the foregoing related description of the case (2) regarding the power transmission path, in this embodiment of this application, the power output by the engine can be transmitted to the motor only after passing through a plurality of gears such as the engine input shaft gear 8, the intermediate shaft pinion 9, the intermediate shaft gearwheel 6, and the motor input shaft gear 5, so that the motor generates electricity, instead of directly connecting the motor input shaft 1a to the engine input shaft gear 1b in a transmission manner. A maximum rotational speed of the motor is usually greater than a maximum rotational speed of the engine. Therefore, a rotational speed ratio can be properly adjusted based on a requirement by using the foregoing setting in this application. In this way, the engine and the motor can work at different rotational speeds, to give full play to their respective rotational speed and torque characteristics.

The third transmission assembly X3 is configured to connect or disconnect the power transmission between the intermediate shaft 2 and the differential gear 4. As shown in FIG. 2, in this embodiment of this application, the third transmission assembly X3 includes the intermediate shaft pinion 9, an output shaft gear 10, and a second clutch 11.

Specifically, in this embodiment, the third transmission assembly X3 includes the intermediate shaft pinion 9. It can be learned from the foregoing analysis that the intermediate shaft pinion 9 is also a part of the second transmission assembly X2. In other words, the intermediate shaft pinion 9 is shared by the third transmission assembly X3 and the second transmission assembly X2. By using the foregoing setting, a structure of the reduction gearbox 100 can be simplified, control complexity can be reduced, and production costs can be reduced.

The output shaft gear 10 is merely sleeved on the differential gear 4 and meshes with the intermediate shaft pinion 9. It can be understood that, that the output shaft gear 10 is merely sleeved on the differential gear 4 means that the output shaft gear 10 is sleeved on the differential gear 4 but power transmission cannot be performed directly between the output shaft gear 10 and the differential gear 4. For example, the output shaft gear 10 may be sleeved on the differential gear 4 by using a bearing.

The second clutch 11 includes a second active part and a second passive part that fit in with each other. The second active part is in transmission connection with the output shaft gear 10, and the second passive part is in transmission connection with the differential gear 4. The second passive part may be considered as a power input end of the differential gear 4.

The power transmission between the intermediate shaft 2 and the differential gear 4 can be connected by joining the second active part and the second passive part of the second clutch 11 together, and the power transmission between the intermediate shaft 2 and the differential gear 4 can be disconnected by separating the second active part from the second passive part.

When the second active part and the second passive part are joined together, power on the intermediate shaft 2 may be transmitted to the differential gear 4 after successively passing through the intermediate shaft pinion 9, the output shaft gear 10, and the second clutch 11.

It should be understood that the foregoing uses two gears and one clutch as an example to describe composition of the third transmission assembly X3, but cannot be construed as any limitation on the composition of the third transmission assembly X3. A quantity of components, and a form and the like of the component included in the third transmission assembly X3 are not limited in this application, and any transmission assembly (or a single component) that can implement the foregoing power transmission functions shall fall within the protection scope of this application.

For example, in another embodiment, the third transmission assembly X3 may include more gears.

For another example, in another embodiment, the third transmission assembly X3 and the second transmission assembly X2 do not share the intermediate shaft pinion 9. A separate gear may be disposed on the intermediate shaft 2 to mesh with the output shaft gear 10, to replace the intermediate shaft pinion 9 in the third transmission assembly X3. Alternatively, the third transmission assembly X3 and the first transmission assembly X1 may share the intermediate shaft gearwheel 6, and the output shaft gear 10 meshes with the intermediate shaft gearwheel 6.

For still another example, in another embodiment, some or all of the current gears of the third transmission assembly X3 may be replaced with another transmission component such as a chain.

For yet another example, in another embodiment, the clutch of the third transmission assembly X3 in this embodiment may alternatively be replaced with a component such as a synchronizer, to connect and disconnect power transmission.

Further, as shown in FIG. 2, the reduction gearbox 100 provided in this embodiment of this application may further include a housing 12. The housing 12 is provided with through holes at locations corresponding to the motor input shaft 1a, the engine input shaft 1b, the first output shaft 3a, and the second output shaft 3b, so that the motor input shaft 1a and the engine input shaft 1b are connected to the motor and the engine, respectively, and the first output shaft 3a and the second output shaft 3b are connected to the wheels. The intermediate shaft 2 is rotatably fastened to an inner wall of the housing 12.

Optionally, a bearing may further be disposed in each through hole, and each of the forgoing shafts is fastened to the bearing, to improve reliability of a connection between the shaft and an external component.

According to another aspect, based on the structure of the reduction gearbox 100, an embodiment of this application further provides an electric vehicle drive system. The following describes the drive system in detail.

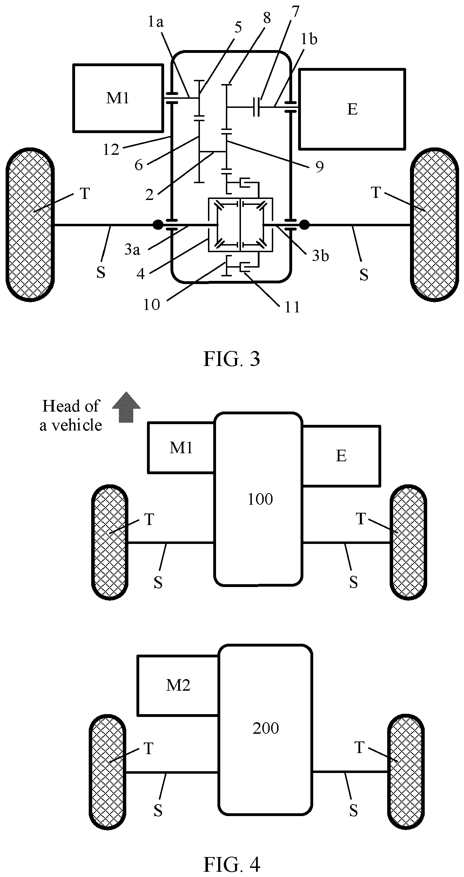

FIG. 3 is an example schematic diagram of a structure of an electric vehicle drive system according to an embodiment of this application. As shown in FIG. 3, the drive system includes a first drive system, and the first drive system includes a first motor M1, an engine E, and the reduction gearbox 100.

The motor input shaft 1a of the reduction gearbox 100 is in transmission connection with an output shaft of the first motor M1, and the engine input shaft 1b of the reduction gearbox 100 is in transmission connection with an output shaft of the engine E.

In the first drive system provided in this embodiment of this application, power transmission between the motor input shaft 1a and the output shaft of the first motor M1 may be implemented in a key (for example, a spline) joint manner, and power transmission between the engine input shaft 1b and the output shaft of the engine E may be implemented in a key (for example, a spline) joint manner.

Further, in this embodiment, the first motor M1 is a dual-purpose motor that is capable of converting mechanical energy into electrical energy and converting electrical energy into mechanical energy. In other words, the first motor M1 may serve as a power output apparatus and outputs power to the reduction gearbox 100 under the action of electric power by using the motor input shaft 1a. In addition, the first motor M1 may also serve as a power generation apparatus, the reduction gearbox 100 may output power to the first motor M1 by using the motor input shaft 1a, so that the first motor generates electricity.

The first output shaft 3a of the reduction gearbox 100 may be in transmission connection with a wheel T on the left side of the vehicle through a halfshaft S, or may be in transmission connection with a wheel T on the right side of the vehicle through a halfshaft S. This is not strictly limited in this embodiment of this application. In the following, for ease of description, unless otherwise specified, an example in which the first output shaft 3a is transmittingly connected to a wheel C on a left side of the vehicle and the second output shaft 3b is transmittingly connected to a wheel C on a right side of the vehicle is used for description, and the left side and the right side of the vehicle are determined by using a driving direction of the vehicle as a reference.

Because the drive system uses the reduction gearbox 100 provided in the foregoing embodiment, the drive system also has a technical effect in correspondence to the reduction gearbox 100. Details are not described herein again.

Optionally, the first drive system may be a front-wheel drive system of the vehicle, or may be a rear-wheel drive system of the vehicle. This is not limited in this application.

Optionally, the first drive system may be a unique drive system of the vehicle, or may be one of a plurality of (for example, two) drive systems. This is not limited in this application.

FIG. 4 is another example schematic diagram of a structure of an electric vehicle drive system according to an embodiment of this application. As shown in FIG. 4, compared with the drive system shown in FIG. 3, the drive system provided in this embodiment includes a second drive system in addition to the first drive system. The second drive system may be any electric vehicle drive system.

As shown in FIG. 4, in this embodiment of this application, the second drive system includes a second motor M2 and a variable speed transmission apparatus 200. The second motor M2 may be any driving motor, and the variable speed transmission apparatus 200 may be a reduction gearbox or a multi-speed transmission. The second motor M2 transmits power to the variable speed transmission apparatus 200 under the action of electric power, and the variable speed transmission apparatus 200 transmits power to wheels T through halfshafts S to drive a vehicle to travel.

As shown in FIG. 4, in this embodiment of this application, the first drive system is a front-wheel drive system, and the second drive system is a rear-wheel drive system. In other words, the first drive system is a drive system that is further forward in a direction of a head of the vehicle.

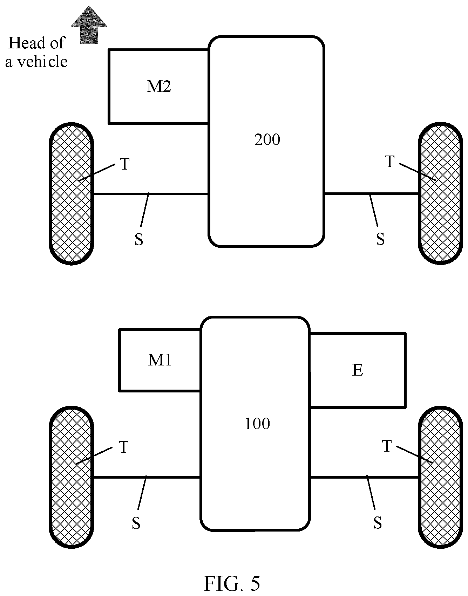

FIG. 5 is still another example schematic diagram of a structure of an electric vehicle drive system according to an embodiment of this application. As shown in FIG. 5, in another embodiment, alternatively, the first drive system may be a rear-wheel drive system, and the second drive system is a front-wheel drive system.

In the drive system provided in this embodiment, the first motor M1 may be controlled to be in a driving, power generation, or stopped state, the engine E may be controlled to be in a driving or stopped state, the power transmission between the engine input shaft 1b and the intermediate shaft 2 may be controlled to be in a connected or disconnected state, and the power transmission between the intermediate shaft 2 and the differential gear 4 may be controlled to be in a connected or disconnected state. In this way, the drive system has drive modes such as a pure electric two-wheel drive (rear-wheel drive) mode, a pure electric four-wheel drive mode, an extended range serial drive mode, and an extended range parallel drive mode, and can switch between different drive modes for use, to satisfy requirements of different operating conditions of the vehicle.

The following describes in detail the four types of drive modes: the pure electric two-wheel drive mode, the pure electric four-wheel drive mode, the extended range serial drive mode, and the extended range parallel drive mode.

### (1) Pure electric two-wheel drive mode

The pure electric two-wheel drive mode means two-wheel drive enabled in a pure electric mode. A typical application scenario of the pure electric two-wheel drive mode is that power of a power battery of a vehicle is sufficient (for example, a state of charge (state of charge, SOC) of the battery) ≥ 20%) and a driving torque requirement of the vehicle is low. In the pure electric two-wheel drive mode, the first drive system may not work, and the second drive system drives the vehicle to travel.

Specifically, in this case, the first motor M1 and the engine E are in a stopped state, the power transmission between the intermediate shaft 2 and the differential gear 4 is in a disconnected state, and the power transmission between the engine input shaft 1b and the intermediate shaft 2 is in a connected or disconnected state; and the second motor M2 is in a driving state.

The following further describes a power transmission path for the drive system in the pure electric two-wheel drive mode with reference to an accompanying drawing.

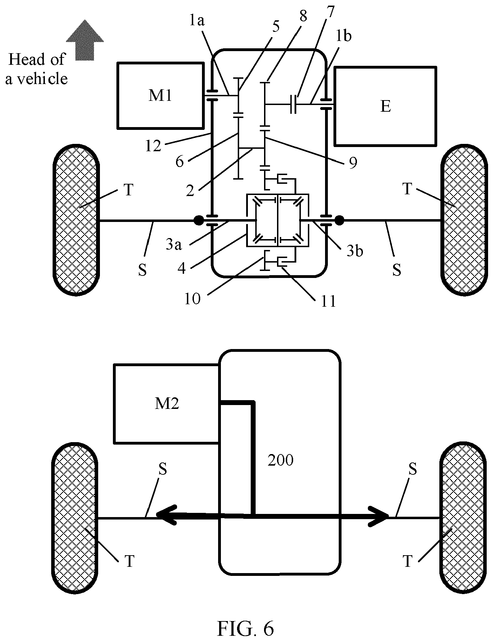

FIG. 6 is a schematic diagram of a power transmission path for a drive system in a pure electric two-wheel drive mode.

As shown in FIG. 6, when the drive system is in the pure electric two-wheel drive mode, the first drive system does not work, and the second drive system drives the vehicle to travel. Power output by the second motor M2 is transmitted to wheels T at the rear of the vehicle after passing through the variable speed transmission apparatus 200 and halfshafts S, to drive the vehicle to travel.

In this case, the second clutch 11 is in a separated state, so that the torque of the differential gear 4 is not transmitted to the intermediate shaft 2, the motor input shaft 1a, and the engine input shaft 1b in a traveling process of the vehicle, and the first motor M1, the engine E, and the shafts and the gears in the reduction gearbox 100 are all in a stopped state. Therefore, no additional mechanical rotation friction loss is caused. This improves economy of the vehicle.

It should be noted that, because the second clutch 11 is in a separated state, the power transmission between the differential gear 4 and the intermediate shaft 2 is disconnected, and a state of the first clutch 7 may not be restricted in this case.

### (2) Pure electric four-wheel drive mode

The pure electric four-wheel drive mode means four-wheel drive enabled in a pure electric mode. A typical application scenario of the pure electric four-wheel drive mode is that power of a power battery of a vehicle is sufficient (for example, a SOC of the battery ≥ 20%) and a driving torque requirement of the vehicle is high. In the pure electric four-wheel drive mode, the first drive system and the second drive system simultaneously drive the vehicle to travel.

Specifically, in this case, the first motor M1 is in a driving state, the engine E is in a stopped state, the power transmission between the intermediate shaft 2 and the differential gear 4 is in a connected state, and the power transmission between the engine input shaft 1b and the intermediate shaft 2 is in a disconnected state; and the second motor M2 is in a driving state.

The following further describes a power transmission path for the drive system in the pure electric four-wheel drive mode with reference to an accompanying drawing.

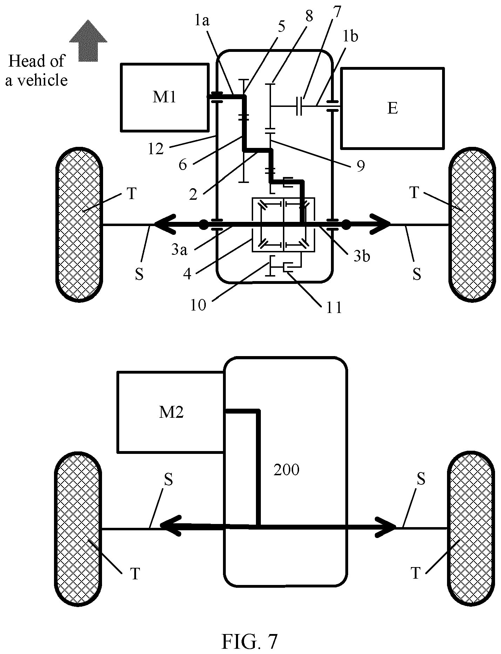

FIG. 7 is a schematic diagram of a power transmission path for a drive system in a pure electric four-wheel drive mode.

As shown in FIG. 7, when the drive system is in the pure electric four-wheel drive mode, the first drive system and the second drive system jointly drive the vehicle to travel.

In this case, the second clutch 11 is in a joined state, and the first clutch 7 is in a separated state. Power output by the first motor M1 is transmitted to the differential gear 4 after successively passing through the motor input shaft 1a, the intermediate shaft gearwheel 6, the intermediate shaft 2, the intermediate shaft pinion 9, the output shaft gear 10, and the second clutch 11, is then transmitted to both the first output shaft 3a and the second output shaft 3b, and is transmitted to wheels T on two sides, that is, left and right sides, at the front of the vehicle through halfshafts S, to drive the vehicle to travel. Because the first clutch 7 is in a separated state, the power output by the first motor M1 cannot be transmitted to the engine E.

Power output by the second motor M2 is transmitted to wheels T on two sides, that is, left and right sides, at the rear of the vehicle after passing through the variable speed transmission apparatus 200 and halfshafts S.

In the pure electric four-wheel drive mode, driving force needed for vehicle traveling is provided by the two motors at the front and rear together, and therefore excellent acceleration performance and maneuverability of the vehicle can be achieved.

### (3) Extended range serial drive mode

A typical application scenario of the extended range serial drive mode is that power of a power battery of a vehicle is insufficient (for example, a SOC of the battery < 20%) and the vehicle is at a low speed. In the extended range serial drive mode, the engine E in the first drive system drives the first motor M1 to generate electricity, and the second drive system drives the vehicle to travel.

Specifically, in this case, the first motor M1 is in a power generation state, the engine E is in a driving state, the power transmission between the intermediate shaft 2 and the differential gear 4 is in a disconnected state, and the power transmission between the engine input shaft 1b and the intermediate shaft 2 is in a connected state; and the second motor M2 is in a driving state.

The following further describes a power transmission path for the drive system in the extended range serial drive mode with reference to an accompanying drawing.

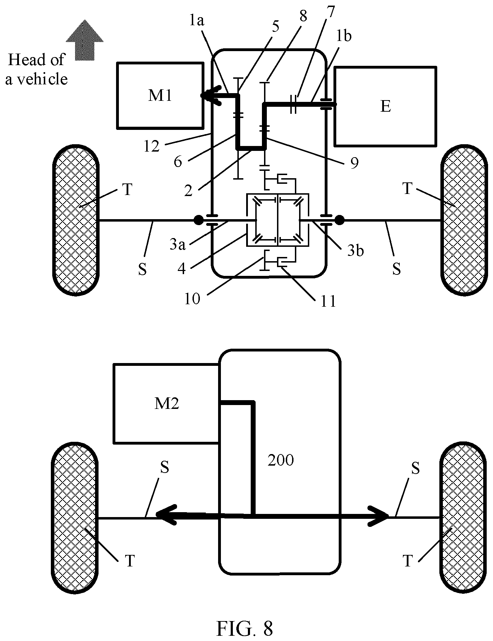

FIG. 8 is a schematic diagram of a power transmission path for a drive system in an extended range serial drive mode.

As shown in FIG. 8, when the drive system is in the extended range serial drive mode, the first drive system drives the first motor M1 to generate electricity, and the second drive system drives the vehicle to travel.

In this case, the first clutch 7 is in a joined state, and the second clutch 11 is in a separated state. Power output by the engine E is transmitted to the first motor M1 after successively passing through the engine input shaft 1b, the first clutch 7, the engine input shaft gear 8, the intermediate shaft pinion 9, the intermediate shaft 2, the intermediate shaft gearwheel 6, the motor input shaft gear 5, and the motor input shaft 1a, to drive the first motor M1 to generate electricity.

Power output by the second motor M2 is transmitted to wheels T on two sides, that is, left and right sides, at the rear of the vehicle after passing through the variable speed transmission apparatus 200 and halfshafts S.

Electrical energy generated by the first motor M1 is used to charge the power battery of the vehicle or is directly supplied to the second motor M2 to drive the vehicle to travel, and driving force needed for vehicle traveling is provided by the second motor M2. In this mode, the engine E can operate stably at a rotational speed and a torque with good fuel economy, and therefore good fuel economy of the vehicle can be achieved in a low-speed congestion condition in the range-extended phase.

### (4) Extended range parallel drive mode

A typical application scenario of the extended range parallel drive mode is that power of a power battery of a vehicle is insufficient (for example, a SOC of the battery < 20%) and the vehicle is at a medium or high speed. In the extended range parallel drive mode, driving or power generation control may be performed on the first motor M1 in the first drive system based on a state of the vehicle and a driving force requirement for traveling.

In the extended range parallel drive mode, the first motor M1 and the engine E in the first drive system may simultaneously drive the vehicle to travel, or the engine E may also drive the first motor M1 to generate electricity while driving the vehicle to travel; and the second drive system drives the vehicle to travel.

Specifically, in this case, the first motor M1 is in a driving or power generation state, the engine E is in a driving state, the power transmission between the intermediate shaft 2 and the differential gear 4 is in a connected state, and the power transmission between the engine input shaft 1b and the intermediate shaft 2 is in a connected state; and the second motor M2 is in a driving state.

The following further describes a power transmission path for the drive system in the extended range parallel drive mode with reference to an accompanying drawing.

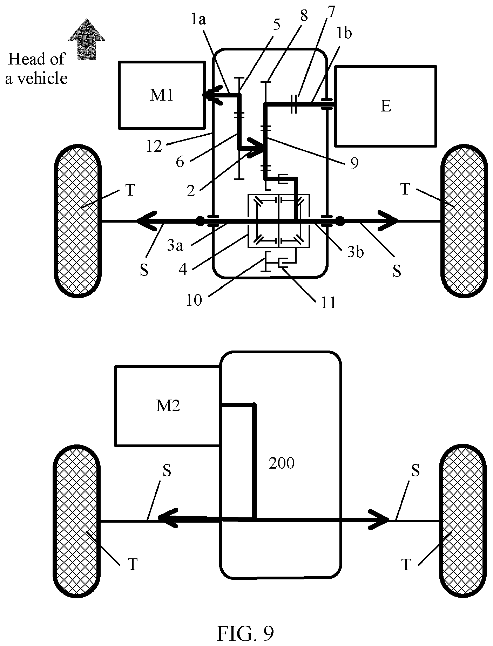

FIG. 9 is a schematic diagram of a power transmission path for a drive system in an extended range parallel drive mode.

As shown in FIG. 9, when the drive system is in an extended range parallel drive mode, the first clutch 7 is in a joined state, and the second clutch 11 is also in a joined state. There may be two cases for the power transmission path based on different operating states of the first motor M1.

When the first motor M1 is in a driving state, power output by the engine E is transmitted to the intermediate shaft pinion 9 after successively passing through the engine input shaft 1b, the first clutch 7, and the engine input shaft gear 8. Power output by the first motor M1 is also transmitted to the intermediate shaft pinion 9 after successively passing through the motor input shaft 1a, the intermediate shaft gearwheel 6, and the intermediate shaft 2. The power of the two paths converges and is transmitted to the differential gear 4 after successively passing through the output shaft gear 10 and the second clutch 11, is then transmitted to both the first output shaft 3a and the second output shaft 3b, and is transmitted to wheels T on two sides, that is, left and right sides, of the vehicle through halfshafts S, to drive the vehicle to travel.

When the first motor M1 is in a power generation state, power output by the engine E is transmitted to the intermediate shaft pinion 9 after successively passing through the engine input shaft 1b, the first clutch 7, and the engine input shaft gear 8. The power is divided into two parts. One part of the power is transmitted to the differential gear 4 after successively passing through the output shaft gear 10 and the second clutch 11, is then transmitted to both the first output shaft 3a and the second output shaft 3b, and is transmitted to wheels T on two sides, that is, left and right sides, of the vehicle through halfshafts S, to drive the vehicle to travel. The other part of the power is transmitted to first motor M1 after successively passing through the intermediate shaft 2, the intermediate shaft gearwheel 6, the motor input shaft gear 5, and the motor input shaft 1a, to drive the first motor M1 to generate electricity.

Power output by the second motor M2 is transmitted to wheels T on two sides, that is, left and right sides, after passing through the variable speed transmission apparatus 200 and halfshafts S.

Driving or power generation control may be performed on the first motor M1 based on a state of the vehicle and a driving force requirement for traveling. In this mode, the power of the engine E can be directly output for driving the vehicle to travel, without many times of energy conversion such as power generation, charging, and discharging, and therefore fuel economy of the vehicle is improved at a medium or high speed of the vehicle in the range-extended phase.

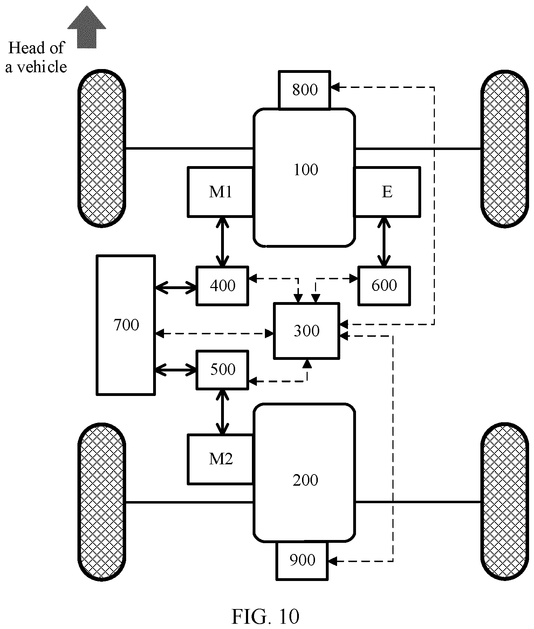

FIG. 10 is a control principle diagram of an electric vehicle drive system according to an embodiment of this application. As shown in FIG. 10, in addition to the first drive system and the second drive system, the drive system further includes a vehicle controller 300 (which may be, for example, an electronic control unit (electronic control unit, ECU)), a first motor controller 400, a second motor controller 500, an engine controller 600, a power battery 700, a reduction gearbox controller 800, and a variable speed transmission apparatus controller 900.

The first motor controller 400 is electrically connected to both the first motor M1 and the vehicle controller 300, the second motor controller 500 is electrically connected to both the second motor M2 and the vehicle controller 300, the engine controller 600 is electrically connected to both the engine E and the vehicle controller 300, and the reduction gearbox controller 800 and the variable speed transmission apparatus controller 900 are electrically connected to the vehicle controller 300. The power battery 700 is electrically connected to all of the first motor M1, the second motor M2, and the vehicle controller 300.

The first motor controller 400 and the second motor controller 500 are configured to control the first motor M1 and the second motor M2, respectively. In one aspect, whether the first motor M1 and the second motor M2 are in a driving state or a stopped state is controlled (the first motor controller 400 may alternatively control the first motor M1 to be in a power generation state). In another aspect, torques output by the first motor M1 and the second motor M2 are controlled when the first motor M1 and the second motor M2 are in a driving state. The power battery 700 outputs a direct current, and the first motor controller 400 and the second motor controller 500 are further configured to convert the direct current output by the power into an alternating current that can be identified by the first motor M1 and the second motor M2. In addition, when the first motor M1 is in a power generation state, the first motor controller 400 can further convert an alternating current generated by the first motor M1 into a direct current, and then store the alternating current to the power battery 700.

The engine controller 600 is configured to control the engine E. For example, the engine controller 600 may control the engine E to be in a driving state or a stopped state, and may also control a torque output by the engine E.

The power battery 700 is configured to supply electrical energy to the first motor M1 and the second motor M2. Moreover, the power battery 700 may further store the electrical energy generated by the first motor M1.

The reduction gearbox controller 800 is configured to control the reduction gearbox 100. Specifically, the reduction gearbox controller 800 is configured to control connection or disconnection of the power transmission between the engine input shaft 1b and the intermediate shaft 2 and connection or disconnection of the power transmission between the intermediate shaft 2 and the differential gear 4. For example, the foregoing objective can be achieved by controlling joining or separation of the first clutch 7 and the second clutch 11.

The variable speed transmission apparatus controller 900 is configured to control the variable speed transmission apparatus 200.

The vehicle controller 300 is a coordinate control center of the vehicle, and is configured to send a control instruction to the first motor controller 400, the second motor controller 500, the engine controller 600, the power battery 700, the reduction gearbox controller 800, and the variable speed transmission apparatus controller 900 based on an operating condition of the vehicle.

Table 1 describes a summary of states of the engine E, the first motor M1, the first clutch 7, the second clutch 11, and the second motor M2 of the drive system in each drive mode:

**Table 1: Summary of states of the drive system in four drive modes**

| Drive mode | | Summary of states of the components | | | | | Typical Application Scenarios |
|---|---|---|---|---|---|---|---|
| | | Engine E | First motor M1 | First clutch 7 | Second clutch 11 | Second motor M2 | |
| Pure electric mode | Pure electric two-wheel drive | Shutdown | Shutdown | Separated or joined | Separate | Driver | Power of a power battery is sufficient, and a driving torque requirement of a vehicle is low. |
| | Pure electric four-wheel drive | Shutdown | Driver | Separate | Joint | Driver | Power of a power battery is sufficient, and a driving torque requirement of a vehicle is high. |
| Extended range mode | Serial drive | Motion control | powered | Joint | Separate | Driver | Power of a power battery is insufficient, and a vehicle is at a low speed. |
| | Parallel drive | Motion control | Driving or power generation | Joint | Joint | Driver | Power of a power battery is insufficient, and a vehicle is at a medium or high speed. |

In summary, the drive system provided in this embodiment of this application can satisfy performance requirements of the vehicle in various working conditions, thereby improving economy, acceleration performance, and maneuverability of the vehicle.

According to still another aspect, an embodiment of this application further provides an electric vehicle, including the drive system provided in any one of the foregoing embodiments. Further, the electric vehicle further includes wheels and halfshafts. The drive system is in transmission connection with the wheels through the halfshafts, to drive the electric vehicle to travel.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A reduction gearbox, comprising a motor input shaft, an engine input shaft, an intermediate shaft, a first output shaft, a second output shaft, and a differential gear, wherein the first output shaft and the second output shaft are in transmission connection with the differential gear, and further comprising:
a first transmission assembly, configured to connect power transmission between the motor input shaft and the intermediate shaft;
a second transmission assembly, configured to connect or disconnect power transmission between the engine input shaft and the intermediate shaft; and
a third transmission assembly, configured to connect or disconnect power transmission between the intermediate shaft and the differential gear.

2. The reduction gearbox according to claim 1, wherein the first transmission assembly comprises:
a motor input shaft gear, which is sleeved on the motor input shaft and is in transmission connection with the motor input shaft; and
an intermediate shaft gearwheel, which is sleeved on the intermediate shaft, is in transmission connection with the intermediate shaft, and meshes with the motor input shaft gear.

3. The reduction gearbox according to claim 1 or 2, wherein the second transmission assembly comprises:
a first clutch, comprising a first active part and a first passive part that fit in with each other, wherein the first active part is in transmission connection with the engine input shaft;
an engine input shaft gear, which is in transmission connection with the first passive part; and
an intermediate shaft pinion, which is sleeved on the intermediate shaft, is in transmission connection with the intermediate shaft, and meshes with the engine input shaft gear.

4. The reduction gearbox according to claim 3, wherein the third transmission assembly comprises:
the intermediate shaft pinion;
an output shaft gear, which is merely sleeved on the differential gear and meshes with the intermediate shaft pinion; and
a second clutch, comprising a second active part and a second passive part that fit in with each other, wherein the second active part is in transmission connection with the output shaft gear, and the second passive part is in transmission connection with the differential gear.

5. An electric vehicle drive system, comprising a first drive system, wherein the first drive system comprises a first motor, an engine, and the reduction gearbox according to any one of claims 1 to 4; and
the motor input shaft is in transmission connection with the first motor, the engine input shaft is in transmission connection with the engine, and the first motor is a dual-purpose motor that is capable of converting mechanical energy into electrical energy, and capable of converting electrical energy into mechanical energy.

6. The drive system according to claim 5, further comprising a second drive system, wherein the second drive system comprises a second motor and a variable speed transmission apparatus, and the second motor is in transmission connection with the variable speed transmission apparatus.

7. The drive system according to claim 6, wherein a drive mode of the drive system comprises a pure electric two-wheel drive mode; and in the pure electric two-wheel drive mode,
the first motor and the engine are in a stopped state, the power transmission between the intermediate shaft and the differential gear is in a disconnected state, and the power transmission between the engine input shaft and the intermediate shaft is in a connected or disconnected state, and
the second motor is in a driving state.

8. The drive system according to claim 6, wherein a drive mode of the drive system comprises a pure electric four-wheel drive mode; and in the pure electric four-wheel drive mode,
the first motor is in a driving state, the engine is in a stopped state, the power transmission between the intermediate shaft and the differential gear is in a connected state, and the power transmission between the engine input shaft and the intermediate shaft is in a disconnected state, and
the second motor is in a driving state.

9. The drive system according to claim 6, wherein a drive mode of the drive system comprises an extended range serial drive mode; and in the extended range serial drive mode,
the first motor is in a power generation state, the engine is in a driving state, the power transmission between the intermediate shaft and the differential gear is in a disconnected state, and the power transmission between the engine input shaft and the intermediate shaft is in a connected state, and
the second motor is in a driving state.

10. The drive system according to claim 6, wherein a drive mode of the drive system comprises an extended range parallel drive mode; and in the extended range parallel drive mode,
the first motor is in a driving or power generation state, the engine is in a driving state, the power transmission between the intermediate shaft and the differential gear is in a connected state, and the power transmission between the engine input shaft and the intermediate shaft is in a connected state, and
the second motor is in a driving state.

11. The drive system according to any one of claims 6 to 10, wherein the first drive system is a front-wheel drive system, and the second drive system is a rear-wheel drive system; or
the first drive system is a rear-wheel drive system, and the second drive system is a front-wheel drive system.

12. An electric vehicle, comprising wheels, halfshafts, and the drive system according to any one of claims 5 to 11, wherein the drive system is in transmission connection with the wheels through the halfshafts, to drive the electric vehicle to travel.
